# EUROPEAN PATENT SPECIFICATION

(11) **EP 2 998 163 B1**
(45) Date of publication and mention of the grant of the patent: **08.11.2017**
(21) Application number: 15183296.1
(22) Date of filing: 01.09.2015
(51) Int. Cl.: B60R 13/08, F02B 77/13

(54) **ENGINE COVER**
MOTORABDECKUNG
COUVERCLE DE MOTEUR

(30) Priority: 16.09.2014 JP 2014188006
(43) Date of publication of application: 23.03.2016
(73) Proprietor: Roki Co., Ltd., Hamamatsu-shi, Shizuoka 431-3314 (JP)
(72) Inventor: SEI, Shuhei, Shizuoka, 431-3314 (JP); ICHIKAWA, Takayuki, Shizuoka, 431-3314 (JP); ONODA, Tadayuki, Shizuoka, 431-3314 (JP)
(74) Representative: Viering, Jentschura & Partner mbB Patent- und Rechtsanwälte

(56) References cited:
- EP-A1- 1 705 643
- DE-U1- 29 605 599
- US-A1- 2004 238 276

## Description

### BACKGROUND OF THE INVENTION

### Field of The Invention

The present invention relates to an engine cover disposed closely to an internal combustion engine of an automobile, and more specifically, to an engine cover provided with a silencing function.

### Related Art

An internal combustion engine of an automobile, for example, generates various radiated sounds such as vibration sound, transmission sound, metal hammering sound at an operation of a fuel injection valve, and the like. Since these sound are generated at various portions of the internal combustion engine, in order to effectively reduce such sounds, an engine cover is mounted to widely cover sound sources to thereby reduce the radiated sounds and to provide a high-class appearance by improving design or layout performance in an engine room.

In conventional art, there are known various types of an engine cover used for an internal combustion engine of an automobile, and for example, in one engine cover, a sound-absorption/heat-insulation member is bonded to a rear surface of the engine cover, and in another one example, an air-layer is formed so as to reduce sound or noise of the internal combustion engine due to vibration thereof and also to improve heat radiation effect from the internal combustion engine.

More specifically, an engine cover disclosed in Patent Document 1 (Japanese Patent Laid-open No. 2012-40912) is provided with a sound absorption member made of foamed resin in a fixed manner within a cover body having a tray-like structure, and the sound absorption member is fixed to a vehicle (i.e., automobile) in a manner opposing to an internal combustion engine of the vehicle, This engine cover is also provided with an air introduction port, an air exhaust port, a pair of noise (sound) introduction ports, and a Helmholtz resonance chamber.

The air introduction port acts to introduce external air into a cover body so as to flow between the sound absorption member and the internal combustion engine, the air exhaust port formed to the cover body and acts to externally exhaust the air inside the cover body, the paired noise introduction ports formed to the sound absorption member so as to be opened toward the internal combustion engine in an arrangement along the longitudinal air-flow direction from the air introduction port to the air exhaust port, and the Helmholtz resonance chamber is formed inside the sound absorption member or to a portion between the sound absorption member and the cover body so as to establish communication between the paired noise introduction ports to thereby reduce the noise introduced through the paired noise introduction ports by the Helmholtz resonant effect.

Furthermore, Patent Document 2 (Japanese Patent Laid-open No. H8-232676) also discloses an engine cover, which is disposed to upper or lower side of an internal combustion engine of an automobile, and this engine cover is provided with a cover body having a predetermined shape which does not interfere with the internal combustion engine and its surrounding vehicle body constituting members, and an air-layer definition plate integrally formed to one side of the cover body facing the engine so as to define an air-layer between the cover body and the air-layer definition plate. The air-layer definition plate is an overheated/compression compact member which is formed by a synthetic resin sheet in which long fibers are evenly dispersed in a monofilament state, and the sheet is then subjected to heat expansion and compression processes. Thus, the engine cover is constituted by an overheated/compression compact member which includes, in a mixed state, a high density layer area that is compressed by a predetermined pressure and a low density layer area that is compressed by a pressure lower than the above predetermined pressure.

With the engine cover disclosed in the Patent Document 1, air in the Helmholtz resonance chamber flows from one side toward the sound introduction port, thus preventing heat from staying in the chamber, and hence, improving silencing effect and heat radiation with high efficiency further in comparison with prior technology.

Furthermore, with the engine cover disclosed in the Patent Document 2, a front surface side wall section positioned in front of the air layer is formed of a flat plate-shaped heat expansion/compression compact material of the synthetic resin sheet in which long fibers are evenly dispersed and which includes low density layer area and high density layer area. According to such structure, since sound or noise in a wide frequency range (for example, 500 to 2000Hz) can be absorbed and reduced, an engine cover with effective sound absorption function for reducing noise in the internal combustion engine can be provided.

However, according to the engine covers disclosed in the Patent Documents 1 and 2, although silencing effect to the resonant frequency corresponding to the volume of the Helmholtz resonance chamber and the volume of the air-layer can be obtained, it is difficult to easily achieve the silencing effect with respect to a desired frequency band range because of variation of frequency band range to be silenced according to displacements (engine exhaust amount) or characteristics of the internal combustion engines.

Moreover, various members or components are arranged in an engine room of a recent automobile and a volume of the engine room is preliminarily set, and accordingly, it is required for the engine cover itself to have a reduced size. However, in the engine covers having conventional structures or arrangements, since the structure is itself complicated, and hence, it is difficult for the engine cover itself to be reduced in size.

Furthermore, according to recent regulation to sound or noise of an automobile, silence performance of in-vehicle is improved, and requirement for silencing performance of the engine cover for shutting off the sound or noise of the internal combustion engine has increased.

DE 29605599 U1 discloses a multilayer sound-absorbing component connected to a substantially rigid carrier-layer and having a substantially porous soft-layer, consisting essentially of foam and having a system of chambers for forming sound-absorbing resonance effects, and a thin covering-layer at least on a side facing away from the carrier-layer, wherein the resonance chambers are formed by a deformed and flexible film onto which the porous soft-layer is foamed on a side facing away from the carrier-layer.

### SUMMARY OF THE INVENTION

The present invention was conceived in consideration of the circumstances mentioned above, and an object thereof is to provide an engine cover of an automobile having a simple structure capable of easily adjusting resonant frequency so as to conform with exhaust amount or characteristics of an internal combustion engine.

The above and other objects can be achieved according to the present invention by providing an engine cover according to claim 1. Further advantageous embodiments of the present invention are disclosed in the dependent claims.

It is further to be noted that the above preferred embodiments do not provide all the essential features of the present invention, and for example, sub-combination of these embodiments may constitute the present invention.

According to the present invention of the structure mentioned above, the following advantageous effects and functions will be achieved.

Since the engine cover of the present invention is provided with the resonance section between the silencing member and the engine cover body, and the resonance section is provided with the volume adjusting means, it is not necessary to form or locate a noise introduction port, an air introduction port and an air exhaust port communicating with the resonance section, which results in downsizing of the engine cover, and moreover, since the resonance section is provided with the volume adjusting means, the silencing effect can be further improved by adjusting the resonant frequency in accordance with the displacement or characteristics of the internal combustion engine.

Furthermore, in the engine cover of the present invention, the silencing member is composed of a multi-layered structure at least including a skin-surface layer, a ventilation adjustment layer and an intermediate layer interposed between the skin-surface layer and the ventilation adjustment layer, and accordingly, the silencing effect can be further enhanced while ensuring the ventilation to the resonance section.

Still furthermore, since the resonance section is defined by a plurality of ribs that are provided so as to stand upward from the engine cover body and arranged so as to intersect with each other, the volume adjusting means can be easily provided. Moreover, since the volume adjusting means is configured to adjust an interval between the ribs and a height thereof, the volume of the resonance section can be easily adjusted by partially removing or cutting off the ribs.

Still furthermore, since the silencing member is fixed to a calking portion formed to the engine cover body, the silencing member can be easily and surely mounted to the engine cover body.

The nature and further characteristic features of the present invention will be made clearer from the following description made with reference to the accompanying drawings.

### BRIEF DESCRIPTION OF THE DRAWINGS

Fig. 1 is a sectional illustration showing an engine cover according to the present embodiment which is mounted in an engine room of an automobile;
Fig. 2 is an illustration showing a rear surface of the engine cover according to the present embodiment;
Fig. 3 is a sectional view taken along the line III-III in Fig. 2;
Fig. 4 is a view illustrating an engine cover body of the engine cover according to the present embodiment;
Fig. 5 is a sectional view of a silencing member mounted to the engine cover according to the present embodiment;
Fig. 6 is an illustration showing a state in which a volume of a resonance section of the engine cover is arranged;
Fig. 7 is a sectional view for explaining mounting method of the silencing member of the engine cover according to the present embodiment; and
Fig. 8A shows a graph explaining a silencing effect by the engine cover according to the present embodiment, and Fig. 8B shows a graph explaining a silencing effect in a case when an interval of ribs is adjusted.

### DESCRIPTION OF THE PREFERRED EMBODIMENT

Hereunder, a preferred embodiment of the present invention will be described with reference to the accompanying drawings.

It is to be noted that the following embodiment is not limited to the invention defined by appended claims, and all the combination of the subject features of the present embodiment described herein is not essential for the solution of the present invention. It is also noted that terms such as "upper", "lower", "right", "left" and the like term for indicating direction are used herein with reference to the illustration on the drawings.

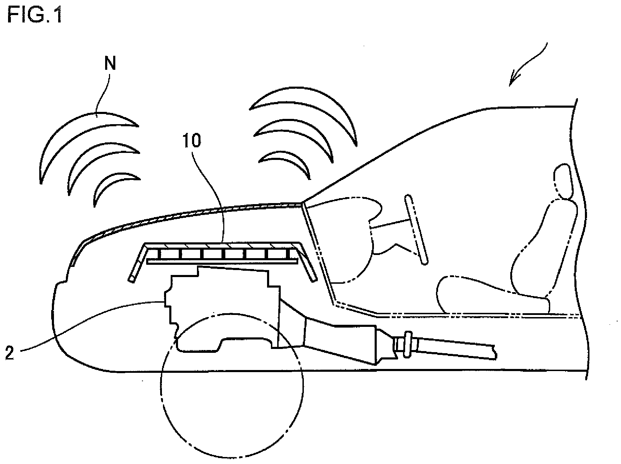

As shown in Fig. 1, an engine cover 10 according to the present embodiment is disposed closely to an internal combustion engine 2 of an automobile 1 so as to cover the same 2. The engine cover 10 covers an upper portion of the internal combustion engine 2 in an engine room, and accordingly, when a bonnet of the automobile 1 is opened, the internal combustion engine 2 and other components are hidden by the engine cover 2 to thereby appear high-sense visual appearance inside the engine room, and also to suppress radiation of radiated noise N generated from the internal combustion engine 2 and the like.

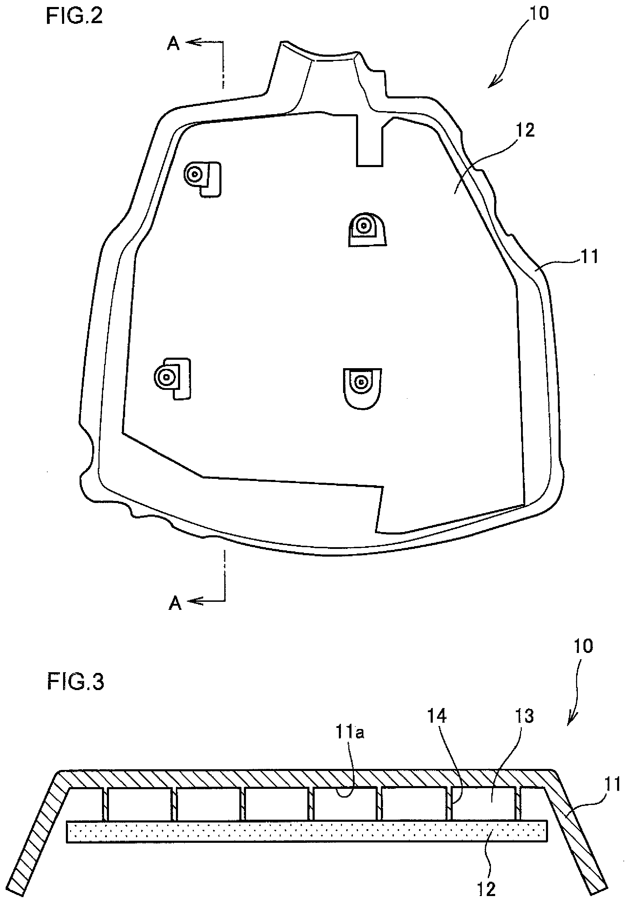

As shown in Fig. 2, the engine cover 10 of the present embodiment is provided with an engine cover body 11 having a dish-like shape so as to cover the internal combustion engine 2 and a silencing member 12 disposed to a surface of the engine cover body 11 facing the internal combustion engine 2.

Furthermore, as shown in Fig. 3 as the sectional view, the engine cover 10 is also provided with a resonance section defined by a plurality of ribs 14 disposed between the engine cover body 11 and the silencing member 12.

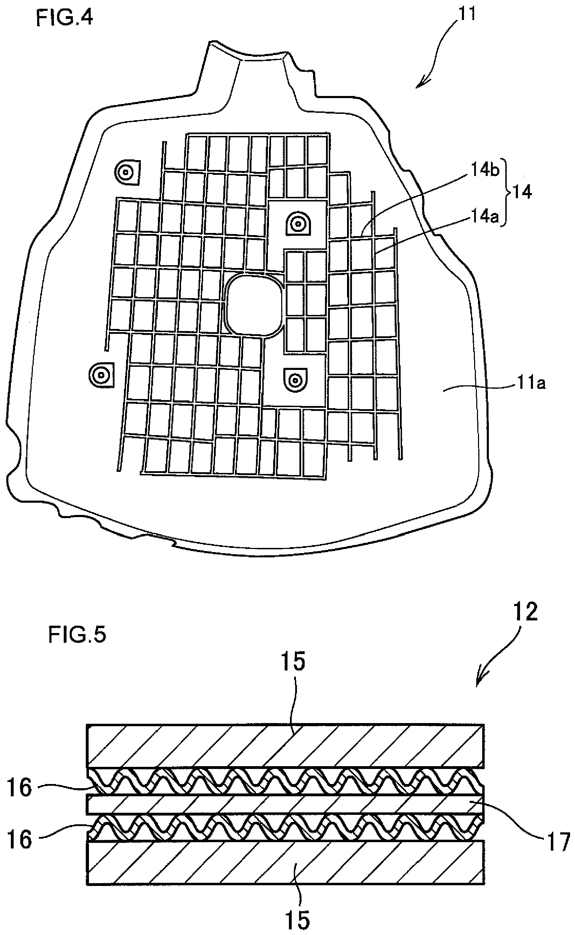

As shown in Fig. 4, the ribs 14 are formed to a surface 11a of the engine cover body 11 facing the internal combustion engine 2 so as to project toward the internal combustion engine 2, The ribs includes vertical ribs 14a and transverse ribs 14b which intersect one another.

It is to be noted that the engine cover body 11 may be preferably made of synthetic resin so that an inner volume is easily adjusted by a volume adjusting means, which will be explained hereinafter. As such synthetic resin, a thermoplastic synthetic resin such as polypropylene group resin, polyamide group resin, or like may be preferably used.

Furthermore, the silencing member 12 has a multi-layer structure in which an intermediate layer 17 is sandwiched between a skin-side surface layer 15 and a ventilation adjustment layer 16.

The skin-side surface 15 is composed of a non-woven fabric cloth in which a thermo-setting resin is impregnated, and the non-woven fabric cloth is made of a base fiber material including aramid fiber, imide fiber, polyvinyl chloride fiber, phenol fiber, rayon fiber, polyester fiber, polypropylene fiber, polyamide group fiber, acrylic acid fiber, carbon fiber, glass fiber, alumina fiber (ceramic fiber), boron fiber, novoloid fiber, fluorine fiber, metal fiber, and the like.

Incidentally, as the thermo-setting resin impregnated into the non-woven fabric cloth, there may be provided an urethane resin, melamine resin or thermo-setting type acrylic resin, and more specifically, a thermo-setting acrylic resin that is hardened by forming ester-binding by being heated, urea resin, phenol resin, epoxy resin, thermo-setting type polyester, or the like.

The ventilation adjusting layer 16 is composed of a paper material having stretchable performance (stretching paper material) having a surface on which a number of concave-convex (non-even) patterns is formed. That is, as such stretching paper material, there is provided a crape-forming paper having a wrinkled surface, an embossed surface having a number of protrusions, or an embossed-crape-forming paper having a surface on which a number of concave-convex-shaped portions and a number of protrusions. As a pulp for forming the stretched paper material, there is provided, for example, a broad leaf wood pulp, a needle leaf wood pulp, hemp pulp, kenaf pulp, bamboo pulp, esparto pulp, bagasse pulp, reed pulp, or like. Furthermore, a synthetic resin may be mixed with such pulp materials with 1 to 50% other than these wood pulps and non-wood pulps.

The intermediate layer 17 is interposed between the skin-side surface layer 15 and the ventilation adjustment layer 16 for adjusting the ventilation (air-flow) resistance of the silencing member 12. This intermediate layer 17 is composed of a laminated material made of the same material as that of the skin-side surface layer 15.

Next, with reference to Fig. 5, the structure of the silencing member 12 will be explained.

As shown in Fig. 5, the silencing member 12 has a structure in which the intermediate layer 17 is sandwiched by a pair of the ventilation adjustment layers 16, and such sandwiched layer is further sandwiched by a pair of ski-side surface layers 15 to thereby provide a laminated structure which is then heat-pressed by means of heat-plate welding to form an integrated structure. Further, it may be possible to interpose a bonding agent between the skin-side surface layers 15 and the ventilation adjustment layers 16 as occasion demands. As such bonding agent, there may be provided acrylic resin group bonding agent, urethane resin group bonding agent, epoxy resin group bonding agent, polyvinyl chloride resin solvent group bonding agent, chloroprene rubber group bonding agent, cyanoacrylate group bonding agent, silicon group bonding agent, modified silicon group bonding agent, resorcinol group bonding agent or the like bonding agent.

As described above, since the silencing member 12 is provided with the skin-surface layers 15, the ventilation adjustment layers 16 and the intermediate layer 17, sound or noise N radiated from the internal combustion engine 2 can be silenced, and then enters the resonance section 13 through the ventilation adjustment layers 16. Further, it is desirable to set a ventilation resistance of the silencing member 12 to be more than 1kPa·s/m, and more preferably, about 1.5kPa·s/m.

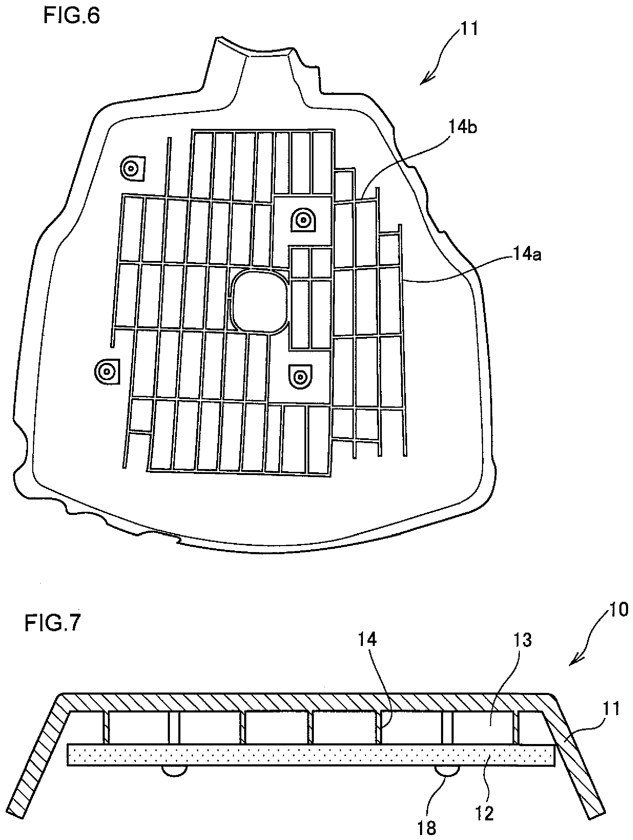

Hereunder, with reference to Figs. 4 and 6, the volume adjusting means (structure) of the engine cover 10 of the present embodiment will be explained.

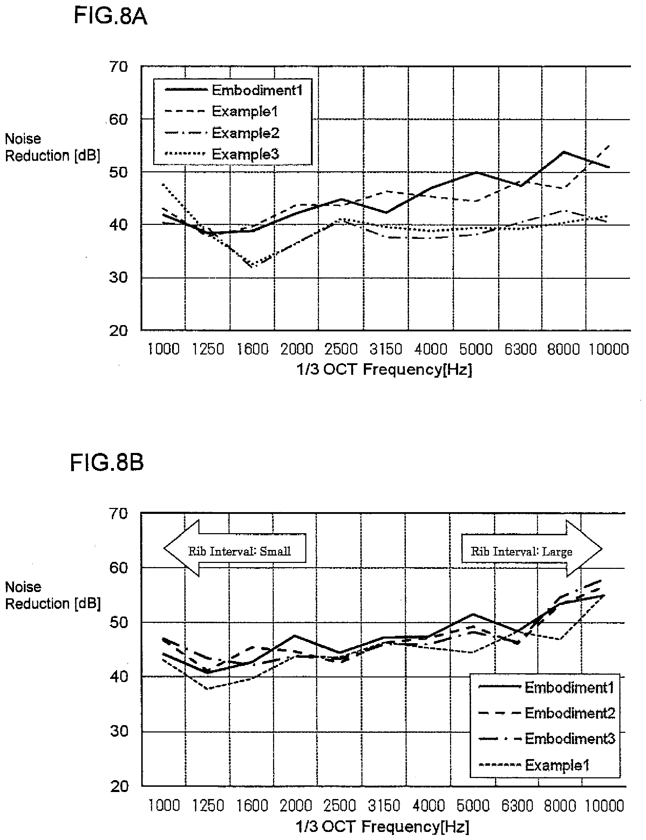

The engine cover 10 of the present embodiment is provided with the resonance section 13 formed by the ribs 14 (14a, 14b) intersecting one another. As shown in Fig. 8B, the resonant frequency of the resonance section 13 becomes predominant to low frequency with small interval of the ribs 14, and on the contrary, becomes predominant to high frequency with large interval of the ribs 14. Therefore, the volume of the resonance section 13 can be adjusted by removing the number of the ribs 14 or adjusting the height thereof in accordance with the frequency band range of the radiated sound or noise from the internal combustion engine 2.

More specifically, when it is required to suppress the radiated sound having high frequency, the resonant frequency can be adjusted close to the high frequency range by easily increasing the volume of the resonance section 13 as shown in Fig. 6 by removing the vertical and transverse ribs 14a and 14b. Further, by making incisions to the ribs 14, the volume of the resonance section 13 can be easily adjusted to thereby adjust the resonant frequency appropriately.

As shown in Fig. 7, it is preferred that the silencing member 12 is inserted to a calking portion 18 formed to the tip end of the rib 14, and the calking portion 18 is then mounted through thermal calking.

The engine cover 10 according to the present embodiment has an improved silencing effect in many frequency band ranges, as shown in Fig. 8A, in comparison with a conventional example 1 in which a sound-absorption/heat-insulation material is bonded to an engine cover. Moreover, in comparison with an example 2 in which the sound-absorption/heat-insulation material is removed from the conventional engine cover and with an example 3 in which the silencing effect of the engine cover body 11 of the present embodiment is measured, it is confirmed that the engine cover 10 of the embodiment of the present invention can achieve the remarkably improved silencing function.

Furthermore, as shown in Fig. 8B, as is apparent from an embodiment 1 in which an interval between the ribs 14 is set to 30mm x 45mm, an embodiment 2 in which an interval between the ribs 14 is set to 30mm x 90mm, and an embodiment 3 in which an interval between the ribs 14 is set to 30mm x 180mm, it was confirmed that the silencing effect can be improved in the low frequency band range by reducing the interval between the ribs 14, and also improved in the high frequency band range by increasing the interval between the ribs 14. According to such fact, the adjustment of the resonant frequency in conformity with the frequency to be silenced becomes possible.

Further, it is to be noted that the present invention is not limited to the described embodiment and many other changes and modifications may be made.

For example, as described hereinbefore, although the engine cover 10 of the present invention is described with reference to the preferred embodiment in which the silencing member 12 is mounted to the engine cover body 11 by means of thermal calking, the mounting method of the silencing member 12 is not limited to the described embodiment, and the silencing member 12 may be attached to the engine cover body 11 by bonding a bonding member.

Moreover, it should be understood that many other changes and modifications other than the above alternation may be also made within the technical scope of the present invention.

## Claims

1. An engine cover (10) arranged closely to an internal combustion engine (2) of an automobile (1), comprising:
an engine cover body (11) disposed so as to cover the internal combustion engine (2),
a silencing member (12) provided to a surface of the engine cover body (11) facing the internal combustion engine (2), and
a resonance section (13) provided for the engine cover body (11) between the engine cover body (11) and the silencing member (12), the resonance section (13) being provided with a volume adjusting means configured to adjust a volume of the resonance section (13),
wherein the resonance section (13) is defined by a plurality of ribs (14, 14a, 14b) that are provided so as to stand upward from the engine cover body (11) and arranged so as to intersect with each other.

2. The engine cover (10) according to claim 1, wherein the silencing member (12) is composed of a multi-layered structure including a skin-surface layer (15), a ventilation adjustment layer (16) and an intermediate layer (17) interposed between the skin-surface layer (15) and the ventilation adjustment layer (16).

3. The engine cover (10) according to claim 1 or 2, wherein the volume adjusting means is configured to adjust an interval between the ribs (14, 14a, 14b) and a height thereof.

4. The engine cover (10) according to any one of claims 1 to 3, wherein the silencing member (12) is fixed to a calking portion formed to the engine cover body (11).

## Patentansprüche

1. Eine Motorabdeckung (10), die nah an einem Verbrennungsmotor (2) eines Automobils (1) angeordnet ist, aufweisend:
einen Motorabdeckungskörper (11), der angeordnet ist, um den Verbrennungsmotor (2) abzudecken,
ein Schalldämpfungselement (12), das an einer Oberfläche des Motorabdeckungskörpers (11) bereitgestellt ist, die dem Verbrennungsmotor (2) zugewandt ist, und
einen Resonanzabschnitt (13), der für den Motorabdeckungskörper (11) zwischen dem Motorabdeckungskörper (11) und dem Schalldämpfungselement (12) bereitgestellt ist, wobei der Resonanzabschnitt (13) mit einem Volumeneinstellmittel bereitgestellt ist, das konfiguriert ist, um ein Volumen des Resonanzabschnitts (13) einzustellen,
wobei der Resonanzabschnitt (13) von einer Mehrzahl von Rippen (14, 14a, 14b) definiert ist, die bereitgestellt sind, um von dem Motorabdeckungskörper (11) nach oben zu stehen, und die angeordnet sind, um sich miteinander zu kreuzen.

2. Die Motorabdeckung (10) gemäß Anspruch 1, wobei das Schalldämpfungselement (12) aus einer Mehrschichtstruktur zusammengesetzt ist, die eine Außenhautoberflächenschicht (15), eine Belüftungseinstellschicht (16) und eine Zwischenschicht (17) aufweist, die zwischen der Außenhautoberflächenschicht (15) und der Belüftungseinstellschicht (16) eingefügt ist.

3. Die Motorabdeckung (10) gemäß Anspruch 1 oder 2, wobei das Volumeneinstellmittel konfiguriert ist, um einen Abstand zwischen den Rippen (14, 14a, 14b) und eine Höhe davon einzustellen.

4. Die Motorabdeckung (10) gemäß irgendeinem der Ansprüche 1 bis 3, wobei das Schalldämpfungselement (12) an einem Verstemmabschnitt befestigt ist, der an dem Motorabdeckungskörper (11) geformt ist.

## Revendications

1. Couvercle de moteur (10) agencé à proximité d'un moteur à combustion interne (2) d'une automobile (1), comprenant :
un corps de couvercle de moteur (11) disposé afin de recouvrir le moteur à combustion interne (2),
un élément de silencieux (12) prévu sur une surface du corps de couvercle de moteur (11) faisant face au moteur à combustion interne (2), et
une section de résonnance (13) prévue pour le corps de couvercle de moteur (11) entre le corps de couvercle de moteur (11) et l'élément de silencieux (12), la section de résonnance (13) étant prévue avec un moyen d'ajustement de volume configuré pour ajuster un volume de la section de résonnance (13),
dans lequel la section de résonnance (13) est définie par une pluralité de nervures (14, 14a, 14b) qui sont prévues pour se dresser à partir du corps de couvercle de moteur (11) et agencées afin de se couper entre elles.

2. Couvercle de moteur (10) selon la revendication 1, dans lequel l'élément de silencieux (12) est composé d'une structure multicouche comprenant une couche de surface de revêtement (15), une couche d'ajustement de ventilation (16) et une couche intermédiaire (17) intercalée entre la couche de surface de revêtement (15) et la couche d'ajustement de ventilation (16).

3. Couvercle de moteur (10) selon la revendication 1 ou 2, dans lequel le moyen d'ajustement de volume est configuré pour ajuster un intervalle entre les nervures (14, 14a, 14b) et sa hauteur.

4. Couvercle de moteur (10) selon l'une quelconque des revendications 1 à 3, dans lequel l'élément de silencieux (12) est fixé sur une partie de calfatage formée sur le corps de couvercle de moteur (11).
